# EUROPÄISCHE PATENTSCHRIFT

(11) **EP 3 625 011 B1**
(45) Veröffentlichungstag und Bekanntmachung des Hinweises auf die Patenterteilung: **21.07.2021**
(21) Anmeldenummer: 18725198.8
(22) Anmeldetag: 16.05.2018
(51) Int. Cl.: B27B 21/00, B27B 21/08, B65G 57/24, B65G 61/00, B27B 31/00, B27B 31/08, B27B 5/065

(54) **ABSTAPELEINRICHTUNG, WERKSTÜCKBEARBEITUNGSANLAGE SOWIE VERFAHREN ZUM BETREIBEN EINER ABSTAPELEINRICHTUNG**
STACKING DEVICE, WORKPIECE PROCESSING SYSTEM AND METHOD FOR OPERATING A STACKING DEVICE
DISPOSITIF DE DÉSEMPILAGE, SYSTÈME DE TRAITEMENT DE PIÈCES ET PROCÉDÉ DESTINÉ À FAIRE FONCTIONNER UN DISPOSITIF DE DÉSEMPILAGE

(30) Priorität: 17.05.2017 DE 102017110744
(43) Veröffentlichungstag der Anmeldung: 25.03.2020
(73) Patentinhaber: HOMAG Plattenaufteiltechnik GmbH, 75365 Calw (DE)
(72) Erfinder: KRETEK, David, 72213 Altensteig (DE); ZIMBAKOV, Darko, 71155 Altdorf (DE); GALAMBOS, Christian, 72189 Voehringen (DE)
(74) Vertreter: DREISS Patentanwälte PartG mbB
(86) Internationale Anmeldenummer: PCT/EP2018/062723
(87) Internationale Veröffentlichungsnummer: WO 2018/210928

(56) Entgegenhaltungen:
- EP-A1- 0 453 806
- EP-A1- 3 081 343
- JP-A- S5 243 267
- JP-A- H01 145 930
- JP-A- S61 257 829

## Beschreibung

Die Erfindung betrifft eine Abstapeleinrichtung sowie eine Werkstückbearbeitungsanlage und ein Verfahren zum Betreiben einer Abstapeleinrichtung nach den Oberbegriffen der nebengeordneten Patentansprüche.

Die DE 10 2015 206 824 A1 beschreibt eine Werkstückbearbeitungsanlage in Form einer Plattenaufteilsäge mit einer Abstapeleinrichtung, bei der aufgeteilte Werkstücke mittels einer als Roboter ausgebildeten Handhabungseinrichtung auf Ablageeinrichtungen in Form von Abstapelplätzen abgestapelt werden können. Die Ablageeinrichtungen sind im Wesentlichen konzentrisch um eine Basis des Roboters herum angeordnet. Der Roboter und weitere Bereiche der Plattenaufteilsäge werden von einer Steuer- und Regeleinrichtung gesteuert und geregelt. Die EP 3 081 343 A1 beschreibt eine Plattenaufteilanlage und ein Verfahren gemäß dem Oberbegriff der Ansprüche 1 und 13, mit einer Abstapeleinrichtung zum Abstapeln von plattenförmigen Werkstücken mit einer Mehrzahl von Ablageeinrichtungen.

Die vorliegende Erfindung hat die Aufgabe, eine Abstapeleinrichtung, eine Werkstückbearbeitungsanlage und ein Verfahren zu deren Betrieb bereitzustellen, wodurch es ermöglicht wird, dass die Abstapeleinrichtung nur wenig Aufstellfläche benötigt, konstruktiv einfach ist und eine möglichst große Anzahl an Ablageeinrichtungen aufweist. Diese Aufgabe wird durch eine Abstapeleinrichtung, eine Werkstückbearbeitungsanlage sowie durch ein Verfahren zu deren Betrieb mit den Merkmalen der nebengeordneten Patentansprüche gelöst. Vorteilhafte Weiterbildungen der Erfindung sind in Unteransprüchen angegeben. Darüber hinaus finden sich für die Erfindung wichtige Merkmale in der nachfolgenden Beschreibung und der beigefügten Zeichnung. Dabei können diese Merkmale für die Erfindung sowohl in Alleinstellung als auch in unterschiedlichen Kombinationen wesentlich sein, ohne dass hierauf nochmals explizit hingewiesen wird.

Die erfindungsgemäße Abstapeleinrichtung umfasst eine Mehrzahl von Ablageeinrichtungen zum Ablegen von insbesondere plattenförmigen Werkstücken und eine automatische Handhabungseinrichtung, welche die bearbeiteten Werkstücke auf den Ablageeinrichtungen ablegen kann, sowie eine Steuer- und/oder Regeleinrichtung, welche mindestens den Betrieb der Handhabungseinrichtung und der Ablageeinrichtungen steuert und/oder regelt. Die Handhabungseinrichtung weist üblicherweise einen Handhabungsabschnitt auf mit einer horizontalen Wirkfläche, die größer ist als eine horizontale Ablagefläche einer Ablageeinrichtung. Mindestens einige der Ablageeinrichtungen weisen jeweils eine höhenverstellbare Ablageplattform auf. Sie können sich in mindestens einem Ruhemodus oder in mindestens einem Ablagemodus befinden. Die Steuer- und/oder Regeleinrichtung steuert die Ablageeinrichtungen mit den höhenverstellbaren Ablageplattform so an, dass mindestens die Ablageeinrichtung, auf die ein Werkstück abgelegt werden soll, im Ablagemodus ist, wohingegen zumindest eine hierzu unmittelbar benachbarte Ablageeinrichtung im Ruhemodus ist, wobei ein vorgesehener Ablagebereich der Ablageeinrichtung, die im Ablagemodus ist, in einer Ablageebene liegt, die in vertikaler Richtung gesehen oberhalb einer höchsten Stelle der zumindest einen Ablageeinrichtung, die im Ruhemodus ist, liegt.

Bei dem erfindungsgemäßen Verfahren wird ein Werkstück mittels einer automatischen Handhabungseinrichtung auf einer Ablageeinrichtung abgelegt, wobei die Ablageeinrichtung eine von einer Mehrzahl von Ablageeinrichtungen ist, welche in Reichweite der Handhabungseinrichtung angeordnet sind. Es umfasst die folgenden Schritte:
a. Auswählen einer Ablageeinrichtung aus der Mehrzahl von Ablageeinrichtungen;
b. Ansteuern mindestens einer Ablageeinrichtung derart, dass sich die ausgewählte Ablageeinrichtung (36 a) in einem Ablagemodus und mindestens eine hierzu benachbarte Ablageeinrichtung (36 b) in einem Ruhemodus befinden, wobei ein vorgesehener Ablagebereich (66) der Ablageeinrichtung (36a), die im Ablagemodus ist, in einer Ablageebene (68) liegt, die oberhalb einer höchsten Stelle (58b) der zumindest einen Ablageeinrichtung (36b), die im Ruhemodus ist, liegt;
c. Ablegen des Werkstücks auf der ausgewählten und im Ablagemodus befindlichen Ablageeinrichtung mittels der automatischen Handhabungseinrichtung.

Als Wirkfläche der Handhabungseinrichtung wird eine sich in den beiden horizontalen Raumrichtungen ausdehnende Fläche verstanden, welche durch den Handhabungsabschnitt belegt wird. Die Ablagefläche einer Ablageeinrichtung definiert eine sich in den beiden horizontalen Raumrichtungen ausdehnende Fläche, welche durch Werkstücke belegt werden kann. Der Ablagebereich einer Ablageeinrichtung ist jener Bereich (innerhalb einer Ablagefläche), in den bzw. auf den ein Werkstück gelegt werden soll. Unter der Ablageebene wird eine Ebene verstanden, die stets oberhalb der höchsten Stellen der sich im Ruhemodus befindlichen Ablageeinrichtungen liegt.

Soll ein Werkstück abgestapelt werden, wird eine Ablageeinrichtung, auf der das werkstückabgestapelt werden soll, ausgewählt. Die Ablageeinrichtungen werden von der Steuer- und/oder Regeleinrichtung dann so angesteuert, dass sich die ausgewählte Ablageeinrichtung in dem Ablagemodus befindet, wohingegen sich zumindest eine jener Ablageeinrichtungen, die zu der ausgewählten Ablageeinrichtung unmittelbar benachbart sind, im Ruhemodus befindet. Wird nun das Werkstück von der Handhabungseinrichtung zu der ausgewählten Ablageeinrichtung bewegt, und bewegt sich der Handhabungsabschnitt der Handhabungseinrichtung nach unten, um das bearbeitete Werkstück im Ablagebereich abzulegen, kann dies geschehen, ohne dass die Gefahr besteht, dass eine Wirkfläche des Handhabungsabschnitts, die aufgrund ihrer Größe seitlich über die Ablagefläche der ausgewählten Ablageeinrichtung übersteht, mit einer benachbarten Ablageeinrichtung und/oder mit auf dieser abgelegten Werkstücken kollidiert.

Der Ablagebereich einer ausgewählten Ablageeinrichtung liegt erfindungsgemäß also stets oberhalb der höchsten Stellen der benachbarten Ablageeinrichtungen - dies im allgemeinen jedoch nur solange, wie ein Werkstück auf der ausgewählten Ablageeinrichtung abgelegt werden soll. Im Ruhemodus befinden sich also die Ablageplattformen der Ablageeinrichtungen in einer unteren Position, wohingegen sich im Ablagemodus die Ablageplattformen der Ablageeinrichtungen in einer oberen Position befinden.

Danach kann - muss aber nicht - die Ablageplattform der ausgewählten Ablageeinrichtung wieder in den Ruhemodus abgesenkt werden oder es kann die benachbarte Ablageeinrichtung wieder aus dem Ruhemodus ebenfalls in den Ablagemodus hochgefahren werden, so dass anschließend eine andere Ablageeinrichtung ausgewählt werden kann, um darauf ein Werkstück abzulegen. Es versteht sich, dass dann, wenn auf eine ausgewählte Ablageeinrichtung unmittelbar nach der Ablage eines ersten Werkstücks ein weiteres Werkstücks abgelegt werden soll, die Gesamtsituation unverändert bleiben kann, bis auch das weitere Werkstück auf ihr abgelegt ist.

Erfindungsgemäß kann also mit einem Handhabungsabschnitt gearbeitet werden, der vergleichsweise groß ist und der somit auch große Werkstücke handhaben kann. Dennoch können auch vergleichsweise kleine Werkstücke, deren horizontale Erstreckung viel kleiner ist als die horizontale Erstreckung der Wirkfläche des Handhabungsabschnitts, mit dem selben Handhabungsabschnitt gehandhabt werden. Beispielsweise eine Verstellbarkeit der Größe der Wirkfläche des Handhabungsabschnitts ist bei der Erfindung nicht erforderlich. Hierdurch werden erhebliche Kosten gespart, da die Komplexität der Anlage reduziert wird. Außerdem können Ablageeinrichtungen vergleichsweise dicht zueinander positioniert werden, wodurch die benötigte Stellfläche der Werkstückbearbeitungsanlage reduziert wird und dennoch eine vergleichsweise große Anzahl von Ablageeinrichtungen eingesetzt werden kann. Auch kann eine kleinere Handhabungseinrichtung verwendet werden, da diese vergleichsweise kleine Wege zurücklegen muss. Schließlich wird die Geschwindigkeit der Werkstückbearbeitungsanlage verbessert, wiederum weil geringere Wege zurückgelegt werden müssen.

Es versteht sich, dass sich zur Erzielung der erfindungsgemäßen Vorteile nicht alle Ablageeinrichtungen außer einer im Ruhemodus befinden müssen. Ebenso möglich ist, dass sich nur jene Ablageeinrichtungen im Ruhemodus befinden, bei denen eine Kollision mit dem Handhabungsabschnitt drohen könnte, wenn dieser ein Werkstück in die im Ablagemodus befindliche Ablageeinrichtung ablegt.

Eine erste Weiterbildung der Erfindung zeichnet sich dadurch aus, dass eine Ablageeinrichtung in den Ablagemodus gebracht wird, indem sie aus einem abgesenkten Ruhemodus in den Ablagemodus angehoben wird. Alternativ oder zusätzlich ist es auch möglich, dass eine Ablageeinrichtung in den Ruhemodus gebracht wird, indem sie aus einem angehobenen Ablagemodus abgesenkt wird.

Erfindungsgemäß können sich also die Ablageeinrichtungen im Normalfall im Ruhemodus befinden, in dem die Ablageplattformen der Ablageeinrichtungen in einer abgesenkten Position sind, so dass die höchsten Stellen der Ablageeinrichtungen unterhalb der im allgemeinen fixen Ablageebene liegen. Soll nun ein bearbeitetes Werkstück auf einer bestimmten ausgewählten Ablageeinrichtung abgelegt werden, wird diese ausgewählte Ablageeinrichtung so angesteuert, dass sich deren Ablageplattform vertikal nach oben bewegt. Hierdurch wird der Ablagebereich dieser ausgewählten Ablageeinrichtung in die Ablageebene gebracht.

Es kann also eine Situation, in der sich nur für eine Ablage ausgewählte eine Ablageeinrichtung im Ablagemodus befindet und die anderen Ablageeinrichtungen im Ruhemodus sind, erreicht werden kann, indem eine Ablageplattform angehoben wird, wohingegen mindestens eine andere Ablageplattform in der unteren Position verharrt. In jeder Hinsicht hierzu gleichwertig und gleichwirkend ist die Variante, bei der die Ablageplattform der für eine Ablage eines Werkstücks ausgewählten Ablageeinrichtung in einer oberen Position verharrt, also im Ablagemodus verbleibt, wohingegen mindestens eine andere Ablageplattformen in eine untere Position abgesenkt und so in den Ruhemodus gebracht wird.
Vorgeschlagen wird auch, dass die höchsten Stellen der im Ruhemodus befindlichen Ablageeinrichtungen in einer selben Ebene (Ruheebene) liegen. Dies reduziert den messtechnischen Aufwand, der erforderlich ist, um sicherzustellen, dass sich alle Ablageeinrichtungen, bis auf die ausgewählte Ablageeinrichtung, im Ruhemodus befinden.

Ferner wird vorgeschlagen, dass die Abstapeleinrichtung mindestens eine Erfassungseinrichtung mit einer horizontalen Erfassungsebene umfasst, welche die Ablageebene und/oder die Ruheebene definiert. Dies ist messtechnisch besonders einfach. Wenn die horizontale Erfassungsebene die Ruheebene definiert, kann, sobald sich die oberste Stelle einer Ablageeinrichtung während des Absenkens in den Ruhemodus aus der horizontalen Erfassungsebene heraus bewegt, das Absenken beendet werden, und man weiß, dass sich nach dem Beenden des Absenkens sich die höchste Stelle der Ablageeinrichtung in der Ruheebene befindet.

Eine sehr einfach und preisgünstig zu realisierende Erfassungseinrichtung besteht darin, dass die Erfassungseinrichtung optisch arbeitet, insbesondere eine Laser-Lichtschranke und/oder einen 2D-Laserscanner umfasst.

Besonders vorteilhaft ist es, wenn die Handhabungseinrichtung einen Roboter oder mindestens ein Portal umfasst.

Vor allem bei der Bearbeitung von plattenförmigen Werkstücken hat sich bewährt, wenn der Handhabungsabschnitt eine Saugtraverse umfasst. Unter dem Begriff der "Saugtraverse" wird eine Einrichtung verstanden, welche eine Basisstruktur umfasst, die im allgemeinen fachwerkartig ausgebildet ist und sich als horizontales und vergleichsweise dünnes Flächenelement erstreckt, wobei an der Basisstruktur eine Mehrzahl von meist ansteuerbaren Vakuumsaugern angeordnet ist, die an einer Oberseite des plattenförmigen Werkstücks angreifen können.

Eine weitere sehr vorteilhafte Ausgestaltung der erfindungsgemäßen Abstapeleinrichtung sieht vor, dass mindestens eine, vorzugsweise alle Ablageeinrichtungen jeweils eine Erfassungseinrichtung aufweisen, welche mit einer Ablageplattform gekoppelt ist und eine relative Entfernung zu einer Referenzebene erfasst. Dies gestattet es nach einer Ablage eines Werkstücks auf einer ausgewählten Ablageeinrichtung zu prüfen, ob das Werkstück korrekt auf dieser Ablageeinrichtung abgelegt wurde. Hierdurch kann die Zuverlässigkeit der Werkstückbearbeitungsanlage deutlich verbessert werden, da beispielsweise erkannt werden kann, ob ein Werkstück schräg oder verkantet abgelegt wurde.

Konkret kann diese Überprüfung dadurch erfolgen, dass nach folgendem Verfahren vorgegangen wird:
a. Herunterbewegen der Ablageplattform der Ablageeinrichtung, bis die höchste Stelle der Ablageeinrichtung in einer Ruheebene liegt,
b. Ermitteln einer Soll-Entfernung der Ablageplattform von einer Referenzebene unter Berücksichtigung der Dicke der auf der Ablageplattform abgelegten Werkstücke und der Entfernung der Ruheebene von der Referenzebene,
c. Vergleichen der ermittelten Soll-Entfernung mit einer Ist-Entfernung,
d. Veranlassen einer Aktion dann, wenn die Ist-Entfernung um mehr als einen Grenzwert von der Soll-Entfernung abweicht.

Es wird an dieser Stelle explizit darauf hingewiesen, dass die zuletzt beschriebene Abstapeleinrichtung und das zuletzt beschriebene Verfahren eigenständige Erfindungen darstellen, mit denen festgestellt werden kann, ob ein Werkstück korrekt abgestapelt wurde. Diese Erfindungen sind insoweit unabhängig davon, ob eine Ablageeinrichtung, auf der ein Werkstück abgestapelt werden soll, in einen Ablagemodus gebracht werden kann oder ob eine Ablageeinrichtung, auf der kein Werkstück abgestapelt werden soll, in einen Ruhemodus gebracht werden kann. Überhaupt sind diese Erfindungen auch unabhängig davon, ob überhaupt eine Mehrzahl von Ablageeinrichtungen vorgesehen ist. Auch bei einer Abstapeleinrichtung, die nur eine einzige Ablageeinrichtung aufweist, kann auf die oben angegebene Art und Weise festgestellt werden, ob ein Werkstück korrekt abgestapelt wurde.

Besonders einfach realisierbar und preisgünstig ist es, wenn die in dem oben beschriebenen Verfahren verwendete Erfassungseinrichtung ein inkrementelles Wegmesssystem oder ein absolutes Wegmesssystem, beispielsweise einen Laser-Entfernungssensor, umfasst.

Die oben angegebene Aktion kann eine Ausgabe einer Information an eine Bedienperson umfassen. Somit kann die Bedienperson beispielsweise manuell eingreifen und das nicht korrekt abgelegte Werkstück in die richtige Position bringen, so dass nachfolgend abgelegte Werkstücke nicht beschädigt werden und die Stabilität des in der Ablageeinrichtung gebildeten Werkstückstapels sichergestellt bleibt.

Besonders prägnant sind die erfindungsgemäßen Vorteile bei einer Werkstückbearbeitungsanlage, insbesondere einer Plattenaufteilanlage, welche eine Abstapeleinrichtung in der oben beschriebenen Art umfasst, und insbesondere bei einer solchen Werkstückbearbeitungsanlage, bei der die Handhabungseinrichtung der Abstapeleinrichtung ausgelegt ist, die Handhabung der Werkstücke an der Werkstückbearbeitungsanlage zu übernehmen.
Bei dem erfindungsgemäßen Verfahren ist es besonders vorteilhaft, wenn im Schritt b geprüft wird, ob der Ablagebereich frei ist. Hierdurch wird die Zuverlässigkeit erhöht.

Ferner wird in Weiterbildung des erfindungsgemäßen Verfahrens vorgeschlagen, dass die Aktion automatisch veranlasst wird, insbesondere, dass eine automatische Aktion der Handhabungseinrichtung veranlasst wird, welche dazu führt, dass sich die Ist-Entfernung der Soll-Entfernung annähert. Somit wird eine vollautomatische Fehlerbehebung realisiert, wodurch die Zuverlässigkeit und die Taktgeschwindigkeit nochmals verbessert werden. Möglich ist ferner bei dem erfindungsgemäßen Verfahren, dass mittels einer ersten Erfassungseinrichtung und mindestens einer zweiten Erfassungseinrichtung, deren Erfassungsrichtungen im Wesentlichen orthogonal zueinander und im wesentlichen in einer Ebene angeordnet sind, eine Art 3-D-Scan eines auf einer Ablageeinrichtung liegenden Werkstückstapels von mindestens zwei Seiten erstellt wird. Auf diese Weise wird ein digitales Modell des abgestapelten Werkstückstapels erstellt, welches einen noch besseren Vergleich des Ist-Zustands mit dem Soll-Zustand ermöglicht.

Nachfolgend wird eine Ausführungsform der Erfindung unter Bezugnahme auf die beigefügte Zeichnung beispielhaft erläutert. In der Zeichnung zeigen:
- Figur 1: eine Draufsicht auf eine Werkstückbearbeitungsanlage und eine Abstapeleinrichtung, welche unter anderem fünf Ablageeinrichtungen umfasst;
- Figur 2: eine schematische Seitenansicht auf zwei benachbarte Ablageeinrichtungen der Abstapeleinrichtung von Figur 1 während eines ersten Zeitpunkt eines Verfahrens, mit dem die Abstapeleinrichtung von Figur 1 betrieben wird;
- Figur 3: eine Ansicht ähnlich zu Figur 2 während eines zweiten Zeitpunkt des Verfahrens, mit dem die Abstapeleinrichtung von Figur 1 betrieben wird;
- Figur 4: eine Ansicht ähnlich zu Figur 2 während eines dritten Zeitpunkt des Verfahrens, mit dem die Abstapeleinrichtung von Figur 1 betrieben wird;
- Figur 5: eine Ansicht ähnlich zu Figur 2 mit einer Ablageeinrichtung, welche in einer Darstellung ausschließlich korrekt abgelegte Werkstücke und in einer anderen Darstellung ein nicht korrekt abgelegtes Werkstück aufweist; und
- Figur 6: ein Flussdiagramm eines Verfahrens zum Betreiben der Abstapeleinrichtung von Figur 1.

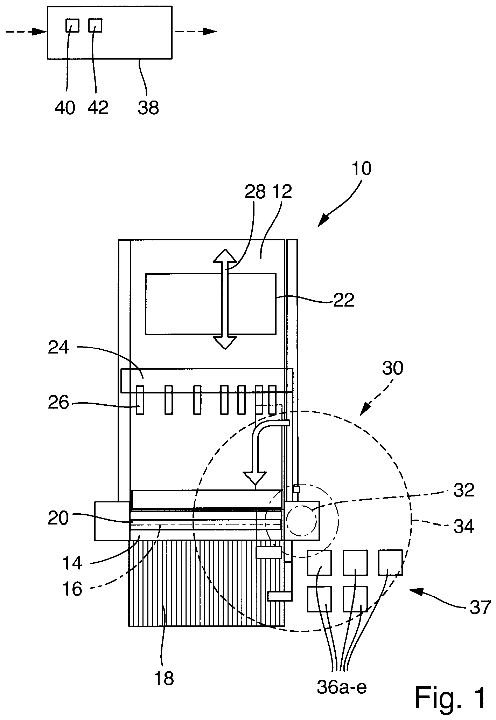

Eine im linken Bereich der Figur 1 gezeichnete Werkstückbearbeitungsanlage trägt dort insgesamt das Bezugszeichen 10. Die Werkstückbearbeitungsanlage von Figur 1 ist beispielhaft als Plattenaufteilanlage, nämlich als Plattenaufteilsäge ausgebildet. Grundsätzlich könnte die Werkstückbearbeitungsanlage 10 aber auch ganz anders ausgebildet sein und ganz andere Werkstücke auf ganz andere Weise bearbeiten, z.B. durch Fräsen der Werkstücke auf einer CNC-Fräsmaschine.

Die Werkstückbearbeitungsanlage 10 umfasst einen Zuführtisch 12, der beispielsweise durch parallel zueinander angeordnete Rollenschienen (nicht dargestellt) gebildet sein kann. In Figur 1 nach unten schließt sich an den Zuführtisch 12 ein Maschinentisch 14 an, in dem eine auf einem Sägewagen angeordnete Sägeeinrichtung (nicht sichtbar) untergebracht ist. Durch die Sägeeinrichtung wird eine Schnittlinie definiert, die in Figur 1 durch eine strichpunktierte Linie 16 angedeutet ist.

In Figur 1 weiter nach unten schließt sich an den Maschinentisch 14 ein Entnahmetisch 18 an. Sowohl der Maschinentisch 14 als auch der Entnahmetisch 18 sind im Allgemeinen als Luftkissentische oder als Rollentische ausgebildet. Auch eine Ausbildung als Bürstentisch wäre denkbar. Oberhalb von der Schnittlinie 16 ist ein Druckbalken 20 vorhanden. Ein auf dem Zuführtisch 12 liegendes plattenförmiges Werkstück 22 kann durch einen Programmschieber 24, an dem mehrere Spannzangen 26 (aus Gründen der Übersichtlichkeit ist in Figur 1 nur eine der Spannzangen mit einem Bezugszeichen versehen) vorhanden sind, in einer Vorschubrichtung 28 bewegt werden.

Seitlich vom Maschinentisch 14 ist eine Handhabungseinrichtung 30 angeordnet, die vorliegend als Roboter, nämlich vorliegend als 4-Achsen-Knickarmroboter ausgebildet ist. Eine stationäre Basis der Handhabungseinrichtung 30 ist durch einen strichpunktiert gezeichneten Kreis 32 angedeutet. Ein Bereich, in dem die Handhabungseinrichtung 30 Werkstücke handhaben kann, ist durch einen gestrichelten Kreis 34 bezeichnet. Dieser Bereich wird auch als Handhabungsbereich bezeichnet. Diese Handhabungseinrichtung 30 kann entweder Bestandteil der Werkstückbearbeitungsanlage 10 oder einer seitlich des Entnahmetisches 18 angeordneten Abstapeleinrichtung 37 sein und hat die primäre Funktion "Handling des Werkstücks während des Bearbeitungsprozesses", vorliegend also während des Aufteilprozesses. Seitlich vom Zuführtisch 12 sind insgesamt fünf Ablageeinrichtungen 36a-e relativ dicht nebeneinander und in der Draufsicht innerhalb des Handhabungsbereichs 34 angeordnet. Die Handhabungseinrichtung 30 zusammen mit den Ablageeinrichtungen 36a-e bildet insgesamt die Abstapeleinrichtung 37. In weiteren nicht dargestellten Ausführungsbeispielen kann die Anzahl der benachbarten Ablageeinrichtungen 2, 3, 4 oder auch eine anderer Zahl größer als 5 betragen.

Zu der Werkstückbearbeitungsanlage 10 und zu der Abstapeleinrichtung 37 gehört eine Steuer- und Regeleinrichtung 38. Diese umfasst einen Prozessor 40 und einen Speicher 42. Die Steuer- und Regeleinrichtung 38 steuert und regelt den Betrieb der Werkstückbearbeitungsanlage 10. Insbesondere werden von der Steuer- und Regeleinrichtung 38 die Handhabungseinrichtung 30 sowie die Ablageeinrichtungen 36 angesteuert, jedoch auch beispielsweise der Programmschieber 24, die Spannzangen 26 sowie die nicht dargestellte Sägeeinrichtung. Alternativ kann für die Abstapeleinrichtung 37 eine separate Steuer- und Regeleinrichtung vorgesehen sein, die mit der Steuer- und Regeleinrichtung 38 der Werkstückbearbeitungsanlage kommuniziert.

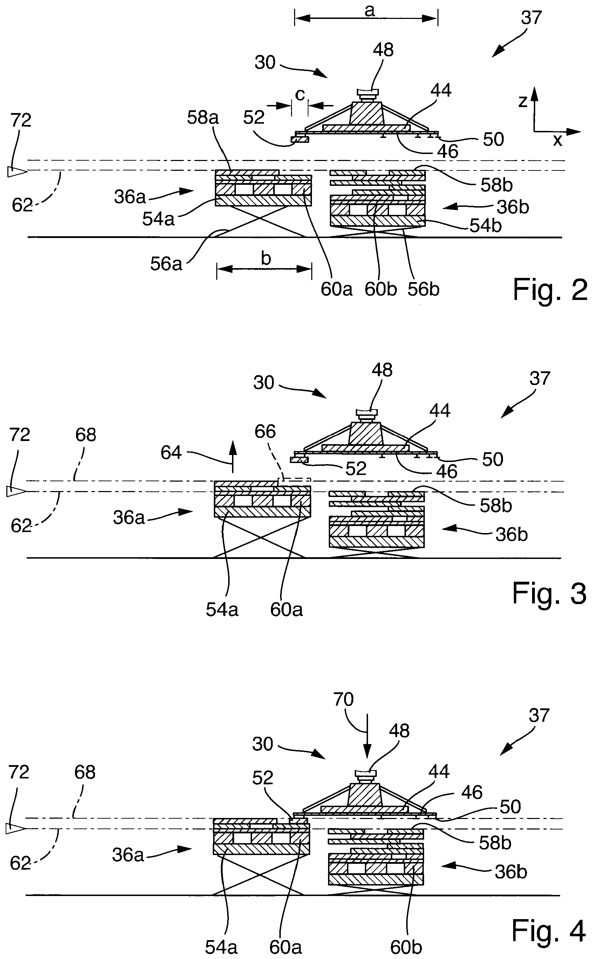

Wie aus den Figuren 2-4 ersichtlich ist, umfasst die Handhabungseinrichtung 30 einen Handhabungsabschnitt 44. Dieser ist vorliegend als Saugtraverse ausgebildet mit einer sich in den beiden horizontalen Raumrichtungen x und y erstreckenden Basisstruktur 46, die am Ende eines Arms 48 der Handhabungseinrichtung 30 angeordnet ist und insgesamt in einer horizontalen Ebene liegt. An der Unterseite der Basisstruktur 46 sind eine Mehrzahl von Vakuumsaugern 50 angebracht. Mittels des Handhabungsabschnitts 44 kann ein auf dem Entnahmetisch 18 liegendes bearbeitetes Werkstück ergriffen und auf einer der Ablageeinrichtungen 36 abgelegt werden, wie weiter unten noch stärker im Detail ausgeführt werden wird. Ein solches bearbeitetes Werkstück trägt in den Figuren 2-4 das Bezugszeichen 52.

Man erkennt aus Figur 2, dass eine horizontale Erstreckung a einer Wirkfläche (ohne Bezugszeichen) des Handhabungsabschnitts 44, also eine Erstreckung in der horizontalen Raumrichtung x, deutlich größer ist als eine horizontale Erstreckung c des handzuhabenden Werkstücks 52 und auch deutlich größer ist als eine horizontale Erstreckung b einer Ablagefläche (ohne Bezugszeichen) der dort beispielhaft dargestellten Ablageeinrichtungen 36a und 36b. Man erkennt aus den Figuren 2-4 ferner, dass die dort beispielhaft gezeigten Ablageeinrichtungen 36a und 36b jeweils eine in der Art eines Tisches ausgebildete Ablageplattform 54a und 54b aufweisen, die auf einem motorisch höhenverstellbaren Gestell 56a und 56b angeordnet ist. Der jeweilige Antriebsmotor des höhenverstellbaren Gestells 56a und 56b ist in den Figuren nicht gezeigt. Die Höhenverstellung der Ablageeinrichtungen 36a und 36b erfolgt beispielsweise durch entsprechende Steuerbefehle der Steuer- und Regeleinrichtung 38.

Der Betrieb der Abstapeleinrichtung 37 wird nun unter Bezugnahme auf die Figuren 2-4 erläutert: zunächst wird entsprechend einem in der Steuer- und Regeleinrichtung 38 auf dem Speicher 42 abgespeicherten Abstapelplan ausgewählt, auf welcher der fünf Ablageeinrichtungen 36a-e das Werkstück 52 abgelegt werden soll. Vorliegend wird von der Steuer-und Regeleinrichtung 38 beispielhaft die Ablageeinrichtung 36a ausgewählt.

Die Ablageeinrichtung 36a befindet sich ebenso wie die anderen Ablageeinrichtungen 36b-e zunächst in einem sogenannten "Ruhemodus". In diesem befinden sich die Ablageplattformen 54a-b in einer unteren Position, sie sind also so weit abgesenkt, dass sich eine höchste Stelle 58a eines auf der Ablageplattform 54a liegenden Werkstückstapels 60a und eine höchste Stelle 58b eines auf der Ablageplattform 54b liegenden Werkstückstapels 60b jeweils auf Höhe einer durch eine strichpunktierte Linie angedeutete Ruheebene 62 befindet. Dies gilt auch für die in den Figuren 2-4 nicht gezeichneten anderen Ablageeinrichtungen 36c-e, deren höchste Stellen sich also alle in derselben Ebene, nämlich der Ruheebene 62, befinden. Da der Werkstückstapel 60a niedriger ist als der Werkstückstapel 60b, ist, um dies zu erreichen, die Ablageplattform 54b weiter abgesenkt als die Ablageplattform 54a. Dieser Zustand ist in Figur 2 dargestellt.

Nun wird die Ablageplattform 54a der ausgewählten Ablageeinrichtung 36a durch eine entsprechende Ansteuerung des Antriebsmotors durch die Steuer- und Regeleinrichtung 38 aus der abgesenkten Stellung nach oben in eine obere Position bewegt, was in Figur 3 durch einen Pfeil 64 angedeutet ist, wohingegen die anderen Ablageeinrichtungen, so auch die Ablageeinrichtung 36b, weiterhin in der Ruhestellung verbleiben. Es wird also immer nur eine der Ablageeinrichtungen 36a-e von der Steuer- und Regeleinrichtung 38 so angesteuert, dass sich deren jeweilige Ablageplattform 54a-e nach oben bewegt und diese ausgewählte Ablageeinrichtung 36a-e den Ruhemodus verlässt.

Die Ablageplattform 54a wird so weit nach oben bewegt, bis sich ein vorgesehener Ablagebereich 66 (in Figur 3 durch ein gepunktetes Rechteck angedeutet) in einer in den Figuren ebenfalls durch eine strichpunktierte Linie angedeuteten Ablageebene 68 befindet. Bei diesem Ablagebereich 66 handelt es sich um jenen Bereich, in dem das Werkstück 52 abgelegt werden soll. Man erkennt aus den Figuren, dass die Ablageebene 68 oberhalb der höchsten Stelle 58b der dargestellten anderen Ablageeinrichtung 36b (und auch aller anderen und in den Figuren 2-4 nicht dargestellten Ablageeinrichtungen 36c-e) liegt, welche weiterhin im Ruhemodus verbleiben.

Nun wird die Handhabungseinrichtung 30 von der Steuer- und Regeleinrichtung 38 so angesteuert, dass der Handhabungsabschnitt 44 entsprechend dem Pfeil 70 in vertikaler Richtung abgesenkt und das Werkstück 52 auf der ausgewählten und im Ablagemodus befindlichen Ablageeinrichtung 36a abgelegt wird, und zwar in den oben erwähnten vorgesehenen Ablagebereich 66. Dies ist in Figur 4 dargestellt. Man erkennt aus Figur 4, dass durch den in der Ablageebene 68 liegenden Ablagebereich 66 das Werkstück 52 abgelegt werden kann, ohne dass der Handhabungsabschnitt 44 mit dem Werkstückstapel 60b, der in der Ablageeinrichtung 36b abgestapelt ist, kollidieren kann. Dies wird ermöglicht, obgleich die horizontale Erstreckung und Anordnung des Handhabungsabschnitts 44 während des Ablegens des Werkstücks 52 so ist, dass der Handhabungsabschnitt 44 die benachbarte Ablageeinrichtung 36b vollständig überdeckt.

Nach dem Ablegen des Werkstücks 52 im Ablagebereich 66 wird die Ablageplattform 54a wieder so weit herunterbewegt, bis sich die Ablageeinrichtung 36a wieder im Ruhemodus befindet. Dies erfolgt folgendermaßen: Seitlich von den Ablageeinrichtungen 36a-e ist eine Erfassungseinrichtung 72 angeordnet, bei der es sich beispielsweise um einen 2D-Laserscanner oder um eine Laser-Lichtschranke handeln kann, wobei grundsätzlich auch ganz andere Arten von Erfassungseinrichtungen denkbar sind. Diese weist eine Erfassungsebene auf, welche exakt die Ruheebene 62 ist. Der Moment, in dem die höchste Stelle 58a der Ablageeinrichtung 36a während des Herunterbewegens unter die Ruheebene 62 gelangt, wird von der Erfassungseinrichtung 72 erfasst, weil die Ablageeinrichtung 36a bzw. der in dieser gestapelte Werkstückstapel 60a die Erfassungsebene verlässt, und der Steuer- und Regeleinrichtung 38 gemeldet.

Dies veranlasst die Steuer- und Regeleinrichtung 38, das Herunterbewegen der Ablageplattform 54a zu stoppen. Die Ablageeinrichtung 36a befindet sich nun wieder im Ruhemodus.

In einem alternativen Ausführungsbeispiel wird die Ablageeinrichtung, auf der das bearbeitete Werkstück abgelegt werden soll, nicht bewegt, und werden statt dessen die um diese Ablageeinrichtung unmittelbar benachbarten Ablageeinrichtungen abgesenkt. Ferner ist es möglich, dass in der Steuer- und Regeleinrichtung 38 vor dem Ablegen eines Werkstücks auf der ausgewählten Ablageeinrichtung 36a ermittelt wird, welche der zu der ausgewählten Ablageeinrichtung 36a benachbarten Ablageeinrichtungen möglicherweise mit dem Handhabungsabschnitt 44 der Handhabungseinrichtung 30 kollidieren können, und es werden selektiv nur diejenigen Ablageeinrichtungen abgesenkt, bei denen ein Kollisionsrisiko besteht.

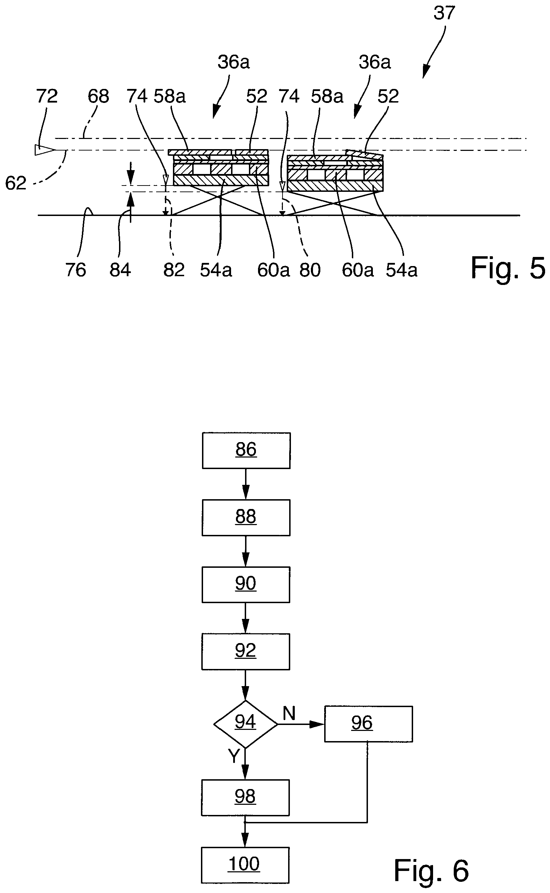

Wie nun unter Bezugnahme auf das Ausführungsbeispiel von Figur 5 erläutert werden wird, wird während bzw. unmittelbar nach dem Herunterbewegen der Ablageplattform 54a geprüft, ob das Werkstück 52 korrekt abgelegt wurde. In Figur 5 ist auf der linken Seite die Ablageeinrichtung 36a mit (theoretisch) korrekt abgelegtem Werkstück 52 gezeigt, und auf der rechten Seite die gleiche Ablageeinrichtung 36a mit einem (tatsächlich) verkantet und insoweit nicht korrekt abgelegten Werkstück 52.

Wie aus Figur 5 ersichtlich ist, verfügt die Ablageeinrichtung 36a (und auch jede andere der Ablageeinrichtungen 36b-e) bevorzugt über eine Erfassungseinrichtung 74, welche mit der Ablageplattform 54a starr gekoppelt ist. Die Erfassungseinrichtung kann beispielsweise einen Laser-Entfernungssensor oder einen Ultraschallsensor umfassen, oder ein inkrementelles oder absolutes Wegmesssystem. Die Erfassungseinrichtung 74 erfasst eine relative Entfernung zu einer Referenzebene 76, welche vorliegend beispielhaft durch den Boden gebildet wird. Möglich wäre auch, dass die Messwerte in den Erfassungseinrichtungen der Ablageeinrichtungen 36a-e miteinander verglichen werden und auf diese Weise eine relative Entfernung ermittelt wird.

Um die korrekte Ablage des Werkstücks 52 zu prüfen, wird die Ablageplattform 54a der ausgewählten Ablageeinrichtung 36a so lange nach unten bewegt, bis die höchste Stelle 58a der ausgewählten Ablageeinrichtung in der Ruheebene 62 liegt (wie oben bereits erläutert wurde). Nun wird eine durch einen Pfeil 80 angedeutete Ist-Entfernung von der Referenzebene 76 mittels der Erfassungseinrichtung 74 ermittelt. Zuvor wurde in der Steuer- und Regeleinrichtung aufgrund der bekannten Dicken der Werkstücke innerhalb des Werkstückstapels 60a und der bekannten Dicke der Ablageplattform 54a sowie der bekannten Entfernung der Ruheebene 62 von der Referenzebene 76 eine (theoretische) Soll-Entfernung (Pfeil 82) bei korrekt abgelegtem Werkstück 52 ermittelt.

Die Steuer- und Regeleinrichtung vergleicht nun die ermittelte (theoretische) Soll-Entfernung 82 mit der ermittelten (tatsächlichen) Ist-Entfernung 80. Man erkennt aus Figur 5 ohne weiteres, dass dann, wenn das Werkstück 52 verkantet abgelegt wurde, die tatsächliche Ist-Entfernung 80 um einen Differenzbetrag 84 kleiner ist als die theoretische Soll-Entfernung 82. Wenn der Differenzbetrag 84 größer ist als ein Grenzwert, wird von der Steuer- und Regeleinrichtung 38 eine Aktion veranlasst, beispielsweise ein akustisches und ein optisches Signal ausgegeben, welches an die Bedienperson die Information ausgibt, dass ganz spezifisch an der Ablageeinrichtung 36a ein Problem vorliegt. Die Bedienperson kann nun den Werkstückstapel 60a von Hand korrigieren und das verkantet abgelegte Werkstück 52 in die richtige Position bringen, so dass nachfolgend auf den Werkstückstapel 60a abgestapelte Werkstücke stabil abgelegt werden können.

Durch den Grenzwert wird berücksichtigt, dass die tatsächliche Dicke der Werkstücke innerhalb des Werkstückstapels 60a von für die Ermittlung der Entfernung 82 verwendeten theoretischen Dicke abweichen kann. Hierdurch werden also Fehlalarme vermieden.

Es versteht sich, dass das unter Bezugnahme auf die Figur 5 beschriebene Verfahren vollkommen unabhängig ist davon, ob eine Ablageeinrichtung, auf der ein Werkstück abgelegt werden soll, in einem Ablagemodus ist und eine oder mehrere andere hierzu benachbarte Ablageeinrichtungen in einem Ruhemodus sind. Überhaupt ist das unter Bezugnahme auf die Figur 5 beschriebene Verfahren vollkommen unabhängig davon, ob die Abstapeleinrichtung nur eine einzige Ablageeinrichtung oder mehrere Ablageeinrichtungen aufweist.

Das oben beschriebene Verfahren kann kurz wie folgt zusammengefasst werden (vergleiche auch Figur 6): nach einem Start im Block 86 wird in einem Block 88 der Ablagebereich 66 der ausgewählten Ablageeinrichtung 36a aus der Ruheebene 62 nach oben gefahren, bis sich der Ablagebereich 66 in der Ablageebene 68 befindet. In einem Block 90 wird dann das Werkstück 52 in den Ablagebereich 66 abgelegt. In einem Block 92 wird die Ablageplattform 54a wieder abgesenkt, bis die höchste Stelle 58a der Ablageeinrichtung 36a gerade unterhalb der Ruheebene 62 liegt. In einem Block 94 wird nun geprüft, ob das Werkstück 52 korrekt abgelegt wurde. Ist die Antwort im Block 94 "Nein", wird im Block 96 eine Aktion veranlasst, beispielsweise eine optische und akustische Information für die Bedienperson ausgegeben. Ist die Antwort im Block 94 dagegen "ja", wird im Block 98 davon ausgegangen, dass das Werkstück 52 korrekt abgelegt wurde. Das Verfahren endet im Block 100.
Das beschriebene Verfahren ist als Computerprogramm auf dem Speicher 42 der Steuer- und Regeleinrichtung 38 abgespeichert. Diese ist so ausgebildet, dass das Verfahren durch die Steuer- und Regeleinrichtung 38 ausgeführt werden kann.

Es sei an dieser Stelle darauf hingewiesen, dass mittels der Erfassungseinrichtung 72 auch die Fläche der Ebene, in der ein Werkstück abgelegt wird, überprüft werden kann. Insbesondere kann ein Vergleich eines Ist-Zustands mit einem Soll-Zustand vorgenommen werden. In Kombination mit einer in der Fig. 5 nicht dargestellten zweiten Erfassungseinrichtung, deren Erfassungsrichtung in der gleichen Ebene aber im Wesentlichen orthogonal zu jener der Erfassungseinrichtung 74 ist, ergibt sich die Möglichkeit, eine Art 3-D-Scan eines Werkstückstapels von zwei Seiten durchzuführen, wenn die jeweilige Ablageeinrichtung abgesenkt wird. In einer weiteren nicht dargestellten Ausführungsform werden vier Erfassungseinrichtungen derart in einem Viereck in der gleichen Ebene angeordnet, so dass deren Erfassungsrichtungen von vier Seiten eine Art 3-D-Scan des Werkstückstapels durchführen können. Dies erhöht zum einen die Dektektionsgenauigkeit, um festzustellen, wenn ein Werkstück nicht korrekt abgelegt wurde, und zum anderen werden Abschattungsbereiche wie bei der Verwendung von nur einer oder nur zwei Erfassungseinrichtungen vermieden.

## Patentansprüche

1. Abstapeleinrichtung (37) zum Abstapeln insbesondere von plattenförmigen Werkstücken (52), mit einer Mehrzahl von Ablageeinrichtungen (36a-e) zum Ablegen von Werkstücken (52) und einer automatischen Handhabungseinrichtung (30), welche die Werkstücke (52) auf den Ablageeinrichtungen (36a-e) ablegen kann, und einer Steuer- und/oder Regeleinrichtung (38), welche mindestens den Betrieb der Handhabungseinrichtung (30) steuert und/oder regelt, wobei diese Ablageeinrichtungen (36a-e) mindestens einen Ruhemodus und mindestens einen Ablagemodus aufweisen, und dass die Steuer- und/oder Regeleinrichtung (38) diese Ablageeinrichtungen (36a-e) so ansteuert, dass mindestens eine Ablageeinrichtung (36a), auf der ein Werkstück (52) abgelegt werden soll, im Ablagemodus ist, wohingegen zumindest eine hierzu unmittelbar benachbarte Ablageeinrichtung (36b) im Ruhemodus ist, **dadurch gekennzeichnet, dass** mindestens einige der Ablageeinrichtungen (36a-e) jeweils eine höhenverstellbare Ablageplattform (54a, 54b) aufweisen, und dass ein vorgesehener Ablagebereich (66) der Ablageeinrichtung (36a), die im Ablagemodus ist, in einer Ablageebene (68) liegt, die oberhalb einer höchsten Stelle (58b) der zumindest einen Ablageeinrichtung (36b), die im Ruhemodus ist, liegt.

2. Abstapeleinrichtung (37) nach Anspruch 1, **dadurch gekennzeichnet, dass** eine Ablageeinrichtung (36a) in den Ablagemodus gebracht wird, indem sie aus einem abgesenkten Ruhemodus in den Ablagemodus angehoben wird.

3. Abstapeleinrichtung nach einem der vorhergehenden Ansprüche, dass eine Ablageeinrichtung in den Ruhemodus gebracht wird, indem sie aus einem angehobenen Ablagemodus abgesenkt wird.

4. Abstapeleinrichtung (37) nach einem der vorhergehenden Ansprüche, **dadurch gekennzeichnet, dass** die höchsten Stellen (58a-b) der im Ruhemodus befindlichen Ablageeinrichtungen (36a-e) in einer selben Ebene (Ruheebene) (62) liegen.

5. Abstapeleinrichtung (37) nach Anspruch 4, **dadurch gekennzeichnet, dass** sie mindestens eine Erfassungseinrichtung (72) mit einer horizontalen Erfassungsebene umfasst, welche die Ablageebene und/oder die Ruheebene (62) definiert.

6. Abstapeleinrichtung (37) nach Anspruch 5, **dadurch gekennzeichnet, dass** die Erfassungseinrichtung (72) optisch arbeitet, insbesondere eine Laser-Lichtschranke und/oder einen 2D-Laserscanner umfasst.

7. Abstapeleinrichtung (37) nach einem der vorhergehenden Ansprüche, **dadurch gekennzeichnet, dass** die Handhabungseinrichtung (30) einen Roboter umfasst.

8. Abstapeleinrichtung (37) nach einem der vorhergehenden Ansprüche, **dadurch gekennzeichnet, dass** der Handhabungsabschnitt (44) eine Saugtraverse umfasst.

9. Abstapeleinrichtung (37) nach einem der vorhergehenden Ansprüche, **dadurch gekennzeichnet, dass** mindestens eine, vorzugsweise alle Ablageeinrichtungen (36) jeweils eine Erfassungseinrichtung (74) aufweisen, welche mit einer Ablageplattform (54) gekoppelt ist und eine relative Entfernung zu einer Referenzebene (76) erfasst.

10. Abstapeleinrichtung (37) nach Anspruch 9, **dadurch gekennzeichnet, dass** die Erfassungseinrichtung (74) ein inkrementelles Wegmesssystem oder ein absolutes Wegmesssystem, beispielsweise einen Laser-Entfernungssensor, umfasst.

11. Werkstückbearbeitungsanlage (10), insbesondere Plattenaufteilanlage, **dadurch gekennzeichnet, dass** sie eine Abstapeleinrichtung (37) nach einem der vorhergehenden Ansprüche umfasst.

12. Werkstückbearbeitungsanlage (10) nach Anspruch 11,
**dadurch gekennzeichnet, dass** die Handhabungseinrichtung (30) der Abstapeleinrichtung (37) ausgelegt ist, die Handhabung der Werkstücke an der Werkstückbearbeitungsanlage (10) zu übernehmen.

13. Verfahren zum Betreiben einer Abstapeleinrichtung (37), bei dem ein Werkstück (52) mittels einer automatischen Handhabungseinrichtung (30) auf einer Ablageeinrichtung (36a) abgelegt wird, wobei die Ablageeinrichtung (36a) eine von einer Mehrzahl von Ablageeinrichtungen (36a-e) ist, welche in Reichweite der Handhabungseinrichtung (30) angeordnet sind, wobei es folgende Schritte umfasst:
a. Auswählen einer Ablageeinrichtung (36a) aus der Mehrzahl von Ablageeinrichtungen (36a-e);
b. Ansteuern mindestens einer Ablageeinrichtung derart, dass sich die ausgewählte Ablageeinrichtung (36a) in einem Ablagemodus und mindestens eine hierzu benachbarte Ablageeinrichtung (36b) in einem Ruhemodus befinden,
c. Ablegen des Werkstücks (52) auf der ausgewählten und im Ablagemodus befindlichen Ablageeinrichtung (36a) mittels der automatischen Handhabungseinrichtung (30);
**dadurch gekennzeichnet, dass** ein vorgesehener Ablagebereich (66) der Ablageeinrichtung (36a), die im Ablagemodus ist, in einer Ablageebene (68) liegt, die oberhalb einer höchsten Stelle (58b) der zumindest einen Ablageeinrichtung (36b), die im Ruhemodus ist, liegt.

14. Verfahren nach Anspruch 13, **dadurch gekennzeichnet, dass** geprüft wird, ob der Ablagebereich (66) frei ist.

15. Verfahren nach einem der Ansprüche 13 oder 14, **dadurch gekennzeichnet, dass** nach dem Schritt c geprüft wird, ob das Werkstück (52) korrekt abgelegt wurde.

16. Verfahren nach Anspruch 15, **dadurch gekennzeichnet, dass** es ferner folgende Schritte umfasst:
a. Herunterbewegen der Ablageplattform (54a) einer Ablageeinrichtung (36a), bis die höchste Stelle (58a) der Ablageeinrichtung (36a) in einer Ruheebene (62) liegt,
b. Ermitteln einer Soll-Entfernung (82) von einer Referenzebene (76) unter Berücksichtigung der Dicke der auf der Ablageplattform (36a) abgelegten Werkstücke und der Entfernung der Ruheebene (62) von der Referenzebene (76),
c. Vergleichen der ermittelten Soll-Entfernung (82) mit einer Ist-Entfernung (80),
d. Veranlassen einer Aktion dann, wenn die Ist-Entfernung (80) um mehr als einen Grenzwert von der Soll-Entfernung (82) abweicht.

17. Verfahren nach Anspruch 16, **dadurch gekennzeichnet, dass** die Aktion eine Ausgabe einer Information an einen Benutzer umfasst.

18. Verfahren nach einem der Ansprüche 16 oder 17, **dadurch gekennzeichnet, dass** die Aktion automatisch veranlasst wird, insbesondere, dass eine automatische Aktion der Handhabungseinrichtung (30) veranlasst wird, welche dazu führt, dass sich die Ist-Entfernung (80) der Soll-Entfernung (82) annähert.

19. Verfahren nach einem der Ansprüche 13-18, **dadurch gekennzeichnet, dass** mittels einer ersten Erfassungseinrichtung (72) und mindestens einer zweiten Erfassungseinrichtung (74), deren Erfassungsrichtungen im Wesentlichen orthogonal zueinander und im wesentlichen in einer Ebene angeordnet sind, eine Art 3-D-Scan eines auf einer Ablageeinrichtung (36a-e) liegenden Werkstückstapels von mindestens zwei Seiten erstellt wird.

## Claims

1. Stacking device (37) for stacking in particular plate shaped workpieces (52), comprising a plurality of depositing devices (36a-e) for depositing workpieces (52), an automatic handling device (30) which can deposit the workpieces (52) on the depositing devices (36a-e), and an open-loop and/or closed-loop control device (38) which controls at least the operation of the handling device (30) in an open-loop and/or closed-loop manner, said depositing devices (36a-e) having at least one idle mode and at least one depositing mode and the open-loop and/or closed-loop control device (38) controlling these depositing devices (36a-e) such that at least one depositing device (36a) on which a workpiece (52) is to be deposited is in the depositing mode, whereas at least one depositing device (36b) directly adjacent thereto is in the idle mode, **characterized in that** at least some of the depositing devices (36a-e) each have a height-adjustable depositing platform (54a, 54 b), and **in that** an intended depositing region (66) of the depositing device (36a) which is in the depositing mode is located in a depositing plane (68) which is above a highest point (58b) of the at least one depositing device (36b) which is in the idle mode.

2. Stacking device (37) according to claim 1, **characterized in that** a depositing device (36a) is brought into the depositing mode by being raised from a lowered idle mode into the depositing mode.

3. Stacking device according to any of the preceding claims, that a depositing device is brought into the idle mode by being lowered from a raised depositing mode.

4. Stacking device (37) according to any of the preceding claims, **characterized in that** the highest points (58a-b) of the depositing devices (36a-e) in the idle mode are located in the same plane (idle plane) (62).

5. Stacking device (37) according to claim 4, **characterized in that** it comprises at least one detection device (72) having a horizontal detection plane which defines the depositing plane and/or the idle plane (62).

6. Stacking device (37) according to claim 5, **characterized in that** the detection device (72) functions optically, in particular comprises a laser light barrier and/or a 2D laser scanner.

7. Stacking device (37) according to any of the preceding claims, **characterized in that** the handling device (30) comprises a robot.

8. Stacking device (37) according to any of the preceding claims, **characterized in that** the handling portion (44) comprises a suction beam.

9. Stacking device (37) according to any of the preceding claims, **characterized in that** at least one, preferably all depositing devices (36) each have a detection device (74) which is coupled to a depositing platform (54) and detects a relative distance to a reference plane (76).

10. Stacking device (37) according to claim 9, **characterized in that** the detection device (74) comprises an incremental distance measuring system or an absolute distance measuring system, for example a laser distance sensor.

11. Workpiece processing system (10), in particular a panel dividing system, **characterized in that** it comprises a stacking device (37) according to any of the preceding claims.

12. Workpiece processing system (10) according to claim 11, **characterized in that** the handling device (30) of the stacking device (37) is designed to take over the handling of the workpieces on the workpiece processing system (10).

13. Method for operating a stacking device (37), in which a workpiece (52) is deposited on a depositing device (36a) by means of an automatic handling device (30), the depositing device (36a) being one of a plurality of depositing devices (36a-e) which are arranged within reach of the handling device (30), said method comprising the following steps:
a. selecting a depositing device (36a) from the plurality of depositing devices (36a-e);
b. controlling at least one depositing device such that the selected depositing device (36a) is in a depositing mode and at least one depositing device (36b) adjacent thereto is in an idle mode,
c. depositing the workpiece (52) on the selected depositing device (36a) which is in the depositing mode by means of the automatic handling device (30);
**characterized in that** an intended depositing region (66) of the depositing device (36a) which is in the depositing mode is located in a depositing plane (68) which is above a highest point (58b) of the at least one depositing device (36b) which is in the idle mode.

14. Method according to claim 13, **characterized in that** it is checked whether the depositing region (66) is free.

15. Method according to claim 13 or claim 14, **characterized in that**, after step c, it is checked whether the workpiece (52) has been deposited correctly.

16. Method according to claim 15, **characterized in that** it further comprises the following steps:
a. moving the depositing platform (54a) of a depositing device (36a) downward until the highest point (58a) of the depositing device (36a) is located in an idle plane (62),
b. determining a target distance (82) from a reference plane (76), taking into account the thickness of the workpieces deposited on the depositing platform (36a) and the distance of the idle plane (62) from the reference plane (76),
c. comparing the determined target distance (82) with an actual distance (80),
d. triggering an action if the actual distance (80) deviates from the target distance (82) by more than a threshold value.

17. Method according to claim 16, **characterized in that** the action comprises outputting information to a user.

18. Method according to claim 16 or claim 17, **characterized in that** the action is triggered automatically, in particular **in that** an automatic action of the handling device (30) is triggered, which action results in the actual distance (80) approaching the target distance (82) .

19. Method according to any of claims 13-18, **characterized in that** a type of 3D scan of a workpiece stack lying on a depositing device (36a-e) is created from at least two sides by means of a first detection device (72) and at least one second detection device (74), of which the detection directions are arranged so as to be substantially orthogonal to one another and substantially in one plane.

## Revendications

1. Dispositif de désempilage (37) destiné à désempiler en particulier des pièces (52) en forme de plaque, comprenant une pluralité de dispositifs de dépôt (36a-e) pour déposer des pièces (52) et un dispositif de manipulation automatique (30) qui peut déposer les pièces (52) sur les dispositifs de dépôt (36a-e), et un dispositif de commande et/ou de régulation (38) qui commande et/ou régule au moins le fonctionnement du dispositif de manipulation (30), dans lequel ces dispositifs de dépôt (36a-e) présentent au moins un mode de repos et au moins un mode de dépôt, et que le dispositif de commande et/ou de régulation (38) commande ces dispositifs de dépôt (36a-e) de telle sorte qu'au moins un dispositif de dépôt (36a) sur lequel doit être déposée une pièce (52) est en mode de dépôt, alors qu'au moins un dispositif de dépôt (36b) immédiatement adjacent à celui-ci est en mode de repos, **caractérisé par le fait qu'**au moins certains des dispositifs de dépôt (36a-e) présentent chacun une plate-forme de dépôt (54a, 54b) réglable en hauteur, et qu'une zone de dépôt (66) prévue du dispositif de dépôt (36a) qui est en mode de dépôt se trouve dans un plan de dépôt (68) qui est situé au-dessus d'un point le plus haut (58b) dudit au moins un dispositif de dépôt (36b) qui est en mode de repos.

2. Dispositif de désempilage (37) selon la revendication 1, **caractérisé par le fait qu'**un dispositif de dépôt (36a) est amené en mode de dépôt en le soulevant à partir d'un mode de repos abaissé dans le mode de dépôt.

3. Dispositif de désempilage selon l'une quelconque des revendications précédentes, qu'un dispositif de dépôt est amené en mode de repos en étant abaissé à partir d'un mode de dépôt soulevé.

4. Dispositif de désempilage (37) selon l'une quelconque des revendications précédentes, **caractérisé par le fait que** les points les plus hauts (58a-b) des dispositifs de dépôt (36a-e) se trouvant en mode de repos sont situés dans un même plan (plan de repos) (62).

5. Dispositif de désempilage (37) selon la revendication 4, **caractérisé par le fait qu'**il comprend au moins un dispositif de détection (72) avec un plan de détection horizontal qui définit le plan de dépôt et/ou le plan de repos (62).

6. Dispositif de désempilage (37) selon la revendication 5, **caractérisé par le fait que** le dispositif de détection (72) fonctionne de manière optique, comprend en particulier un barrage photoélectrique laser et/ou un scanner laser 2D.

7. Dispositif de désempilage (37) selon l'une quelconque des revendications précédentes, **caractérisé par le fait que** le dispositif de manipulation (30) comprend un robot.

8. Dispositif de désempilage (37) selon l'une quelconque des revendications précédentes, **caractérisé par le fait que** la section de manipulation (44) comprend une traverse d'aspiration.

9. Dispositif de désempilage (37) selon l'une quelconque des revendications précédentes, **caractérisé par le fait qu'**au moins un, de préférence tous les dispositifs de dépôt (36) comprennent chacun un dispositif de détection (74) qui est couplé à une plate-forme de dépôt (54) et détecte une distance relative par rapport à un plan de référence (76) .

10. Dispositif de désempilage (37) selon la revendication 9, **caractérisé par le fait que** le dispositif de détection (74) comprend un système de mesure de distance incrémentale ou un système de mesure de distance absolue, par exemple un capteur de distance laser.

11. Installation de traitement de pièces (10), en particulier installation à diviser des plaques, **caractérisée par le fait qu'**elle comprend un dispositif de désempilage (37) selon l'une quelconque des revendications précédentes.

12. Installation de traitement de pièces (10) selon la revendication 11, **caractérisée par le fait que** le dispositif de manipulation (30) du dispositif de désempilage (37) est conçu pour prendre en charge la manipulation des pièces sur l'installation de traitement de pièces (10).

13. Procédé destiné à faire fonctionner un dispositif de désempilage (37), dans lequel une pièce (52) est déposée sur un dispositif de dépôt (36a) au moyen d'un dispositif de manipulation automatique (30), dans lequel le dispositif de dépôt (36a) est l'un parmi une pluralité de dispositifs de dépôt (36a-e) qui sont disposés à portée de main du dispositif de manipulation (30), comprenant les étapes suivantes consistant à:
a. sélectionner un dispositif de dépôt (36a) parmi la pluralité de dispositifs de dépôt (36a-e);
b. commander au moins un dispositif de dépôt de telle sorte que le dispositif de dépôt (36a) sélectionné se trouve dans un mode de dépôt et qu'au moins un dispositif de dépôt (36b) adjacent à celui-ci se trouve dans un mode de repos,
c. déposer la pièce (52) sur le dispositif de dépôt (36a) sélectionné et se trouvant dans le mode de dépôt, au moyen du dispositif de manipulation automatique (30);
**caractérisé par le fait qu'**une zone de dépôt (66) prévue du dispositif de dépôt (36a) qui se trouve dans le mode de dépôt, est située dans un plan de dépôt (68) qui se trouve au-dessus d'un point le plus haut (58b) dudit au moins un dispositif de dépôt (36b) qui se trouve dans le mode de repos.

14. Procédé selon la revendication 13, **caractérisé par le fait que** l'on vérifie si la zone de dépôt (66) est libre.

15. Procédé selon l'une quelconque des revendications 13 ou 14, **caractérisé par le fait que** l'on vérifie, après l'étape c, si la pièce (52) a été déposée de manière correcte.

16. Procédé selon la revendication 15, **caractérisé par le fait qu'**il comprend en outre les étapes suivantes consistant à:
a. descendre la plate-forme de dépôt (54a) d'un dispositif de dépôt (36a) jusqu'à ce que le point le plus haut (58a) du dispositif de dépôt (36a) se trouve dans un plan de repos (62),
b. déterminer une distance prescrite (82) par rapport à un plan de référence (76) en tenant compte de l'épaisseur des pièces déposées sur la plate-forme de dépôt (36a) et de la distance du plan de repos (62) par rapport au plan de référence (76),
c. comparer la distance prescrite (82) déterminée à une distance réelle (80),
d. lancer une action lorsque la distance réelle (80) diffère de la distance prescrite (82) de plus d'une valeur limite.

17. Procédé selon la revendication 16, **caractérisé par le fait que** l'action comprend une sortie d'informations à un utilisateur.

18. Procédé selon l'une quelconque des revendications 16 ou 17, **caractérisé par le fait que** l'action est lancée automatiquement, en particulier qu'une action automatique du dispositif de manipulation (30) est lancée qui conduit à ce que la distance réelle (80) s'approche de la distance prescrite (82).

19. Procédé selon l'une quelconque des revendications 13 à 18, **caractérisé par le fait qu'**un balayage de type 3-D d'une pile de pièces reposant sur un dispositif de dépôt (36a-e) est créé à partir d'au moins deux côtés au moyen d'un premier dispositif de détection (72) et d'au moins un deuxième dispositif de détection (74) dont les directions de détection sont disposées pour l'essentiel orthogonalement l'une à l'autre et pour l'essentiel dans un plan.
